# EUROPÄISCHE PATENTSCHRIFT

(11) **EP 4 402 227 B1**
(45) Veröffentlichungstag und Bekanntmachung des Hinweises auf die Patenterteilung: **04.02.2026**
(21) Anmeldenummer: 22790266.5
(22) Anmeldetag: 16.09.2022
(51) Int. Cl.: C10J 3/00, C10J 3/74, C10G 53/10, C10G 53/12, C10G 1/10, C10G 1/00

(54) **VERFAHREN ZUR REINIGUNG EINES SYNTHETISCHEN ROHÖLSTROMS**
METHOD FOR THE PURIFICATION OF A FLOW OF SYNTHETIC CRUDE OIL
PROCÉDÉ DE PURIFICATION D'UN ÉCOULEMENT DE PÉTROLE BRUT SYNTHÉTIQUE

(30) Priorität: 17.09.2021 EP 21197394
(43) Veröffentlichungstag der Anmeldung: 24.07.2024
(73) Patentinhaber: OMV Downstream GmbH, 1020 Wien (AT)
(72) Erfinder: MASTALIR, Matthias, 1020 Wien (AT)
(74) Vertreter: SONN Patentanwälte GmbH & Co KG
(86) Internationale Anmeldenummer: PCT/EP2022/075716
(87) Internationale Veröffentlichungsnummer: WO 2023/041680

(56) Entgegenhaltungen:
- GB-A- 590 635
- US-A1- 2006 144 761
- US-B2- 9 045 698

## Beschreibung

Die vorliegende Erfindung betrifft Verfahren zur Reinigung eines synthetischen Rohölstroms.

Synthetisches Rohöl, teilweise auch als Syncrude bezeichnet, kann aus unterschiedlichen Prozessen geworden werden. Beispielsweise kann es sich bei synthetischem Rohöl um Schieferöl handeln, welches durch Pyrolyse aus Ölschiefer gewonnen wird. Eine weitere Quelle sind aus Ölsand gewonnene Kohlenwasserstoffe, insbesondere Bitumen, aus welchen durch Upgrading synthetisches Rohöl erhalten werden kann. Darüber hinaus kann synthetisches Rohöl auch aus Kunststoffmaterial, beispielsweise Kunststoffabfall, durch Cracken hergestellt werden.

Synthetische Rohöle enthalten typischerweise unterschiedlicher Verunreinigungen, welche nachteilige Auswirkungen auf Raffinierungsprozesse und Raffinerieanlagen haben können bzw. das Rohöl auch gänzlich ungeeignet für gewisse Raffinierungsprozesse machen. Art und Gehalt der Verunreinigungen können dabei je nach Quelle und Verfahren zur Gewinnung des synthetischen Rohöls stark variieren.

Die WO 2020/020769 A1 beschreibt Verfahren zum Reinigen eines recycelten oder erneuerbaren organischen Materials, umfassend das Erhitzen des Materials in Gegenwart einer wässrigen Alkalimetallhydroxidlösung und das Hydrotreating in Gegenwart eines Hydrotreating-Katalysators, um gereinigtes Material mit einem reduzierten Chlorgehalt zu erhalten.

Die WO 2021/105326 A1 beschreibt Verfahren zur Behandlung von verflüssigtem Kunststoffabfallmaterial, umfassend die Vorbehandlung des verflüssigten Kunststoffabfallmaterials mit einem wässrigen Medium mit einem pH-Wert von mindestens 7 bei einer Temperatur von mindestens 200 °C, einem anschließenden Hydrotreating sowie einer Nachbehandlung, um einen Steamcracker-Feed zu erhalten.

Die WO 2014/165859 A1 beschreibt Verfahren und Vorrichtungen zur Behandlung von synthetischem Rohöl, wobei das synthetische Rohöl mit einer wässrigen basischen Prozesslösung gewaschen wird, um den Säuregehalt zu reduzieren. Das Verfahren kann auch zwei oder mehr Waschschritte umfassen.

Weitere Verfahren zur Reinigung oder Behandlung von Ölen sind beschrieben in US 9 045 698 B2, US 2006/144761 A1 und GB 590 635 A.

Die aus dem Stand der Technik bekannten Reinigungsverfahren sind jedoch oft aufwendig und/oder unzureichend. Insbesondere werden Verunreinungen, z.B. Neutralverbindungen (wie Ester, Aldehyde, Ketone, Organohalogenverbindungen, Amide, Nitrile) oder auch polycyclische Amine oft unzureichend bzw. gar nicht entfernt. Dies ist insbesondere bei komplexen Ausgangsmaterialien problematisch, bei welchen die Verunreinigungsprofile stark variieren können, beispielsweise bei aus Plastikabfällen gewonnenem synthetischen Rohöl. Unzureichend entfernte Verunreinigungen können in der Folge zu Problemen bei der Weiterverarbeitung des gereinigten Rohöls führen. Ein weiteres Problem ist die bei vielen Reinigungsprozessen beobachtete Bildung von Ablagerungen in den Anlagen, was die Reinigung der Anlagen erschwert und einen effizienten Betrieb behindert.

Es besteht daher weiterhin Bedarf an neuen bzw. verbesserten Verfahren zur Reinigung von synthetischem Rohöl. Es ist eine Aufgabe der vorliegenden Erfindung solche Verfahren zur Verfügung zu stellen. Insbesondere ist es eine Aufgabe der Erfindung, Verfahren zur Reinigung von synthetischem Rohöl bereitzustellen, welche eine besonders effiziente und gründliche Entfernung von Verunreinigungen ermöglichen, insbesondere nicht nur von Verunreinigungen in Form von sauren oder basischen Verbindungen, sondern auch von Neutralverbindungen. Eine weitere Aufgabe der Erfindung ist es, die Bildung von Ablagerungen im Zuge des Reinigungsverfahrens zu minimieren. Eine weitere Aufgabe ist es, möglichst effiziente und ökonomische Reinigungsverfahren zur Verfügung zu stellen.

Erfindungsgemäß wird diese Aufgabe gelöst durch ein Verfahren zur Reinigung eines synthetischen Rohölstroms, umfassend die folgenden Schritte:
- Bereitstellen eines synthetischen Rohölstroms;
- Waschen des synthetischen Rohölstroms mit einer ersten wässrigen Waschlösung bei einer ersten Temperatur, um einen ersten gereinigten synthetischen Rohölstrom zu erhalten; und
- Waschen des ersten gereinigten synthetischen Rohölstroms mit einer zweiten wässrigen Waschlösung bei einer zweiten Temperatur, um einen zweiten gereinigten synthetischen Rohölstrom zu erhalten,
wobei die erste wässrige Waschlösung basisch ist, die zweite wässrige Waschlösung sauer ist, und die zweite Temperatur niedriger als die erste Temperatur ist, wobei die erste Temperatur mehr als 100 °C beträgt.

In einem weiteren Aspekt betrifft die vorliegende Erfindung ein Verfahren zur Herstellung von synthetischem Rohöl, umfassend die folgenden Schritte:
- Erzeugen eines synthetischen Rohölstroms, vorzugsweise durch Depolymerisation von Kunststoffmaterial, insbesondere von Kunststoffabfall; und
- Reinigen des synthetischen Rohölstroms nach dem Verfahren zur Reinigung eines synthetischen Rohölstroms gemäß Anspruch 1.

Es hat sich im Zuge der vorliegenden Erfindung überraschend ergeben, dass es vorteilhaft ist, einen basischen Waschschritt bei einer höheren Temperatur gefolgt von einem sauren Waschschritt bei einer niedrigeren Temperatur durchzuführen. Überraschende Vorteile ergeben sich dabei sowohl daraus, dass der basische Waschschritt vor dem sauren Waschschritt durchgeführt wird, als auch daraus, dass die Temperatur beim basischen Waschschritt höher ist als beim sauren Waschschritt.

In Bezug auf die Reihenfolge der Waschschritte hat sich überraschenderweise gezeigt, dass die Durchführung des basischen Waschschritts vor dem sauren Waschschritt zu einer besseren Phasentrennung sowie zu einer erheblichen Reduktion von Ablagerungen führen kann. Bei der Durchführung eines sauren Waschschritts ohne vorhergehenden basischen Waschschritt beobachteten die Erfinder die Bildung von Ablagerungen, welche sich vor allem als ausgefallene Wachscarbonsäuren herausstellten. Wachscarbonsäuren sind langkettige Carbonsäuren, beispielsweise mit Kettenlängen zwischen 20 und 75 Kohlenstoffatomen. Neben paraffinischen unverzweigten und verzweigten Ketten können Wachscarbonsäuren auch aromatische, olefinische und heteroatomare Funktionalitäten aufweisen. Wachscarbonsäuren sind in vielen synthetischen Rohölen enthalten, insbesondere in Pyrolyseölen (z.B. aus der Pyrolyse von Kunststoff), da diese Verbindungen im Pyrolyseprozess vermehrt entstehen können, z.B. aus Reaktionen mit eingebrachtem Sauerstoff oder durch bereits vorhandene funktionelle Polymere oder Additive. Im synthetischen Rohöl liegen Wachscarbonsäuren häufig gebunden als Salze vor. Im Zuge der Erfindung hat sich herausgestellt, dass die Behandlung eines nicht vorbehandelten synthetischen Rohölstroms mit einer sauren wässrigen Waschlösung dazu führen kann, dass gebundene Wachscarbonsäuren protoniert und damit freigesetzt werden. Die so freigesetzten Wachscarbonsäuren können einerseits ausfallen und unerwünschte Ablagerungen bilden, andererseits hat sich gezeigt, dass die freigesetzten Wachscarbonsäuren als Tenside wirken können und Mischphasen bilden bzw. unerwünschte Verbindungen wie Wasser, Schwermetalle und Stickstoffverbindungen in der Ölphase binden können. Nicht entfernte Wachscarbonsäuren können außerdem zur Korrosion in den Anlagen führen sowie als Katalysatorgift bei nachfolgenden Weiterverarbeitungen des synthetischen Rohöls wirken.

Im Zuge der Erfindung hat sich gezeigt, dass die Freisetzung von gebundenen Wachscarbonsäuren und die damit einhergehenden Probleme dadurch reduziert werden können, dass ein basischer Waschschritt vor dem sauren Waschschritt durchgeführt wird. Bei der Wäsche mit einer basischen wässrigen Waschlösung liegen die Wachscarbonsäuren hauptsächlich deprotoniert vor und können über die Wasserphase entfernt werden, sodass die nachteiligen Effekte im nachfolgenden sauren Waschschritt vermindert werden. Die erfindungsgemäß vorgesehene Reihenfolge des Waschens mit der ersten wässrigen Waschlösung und der zweiten wässrigen Waschlösung kann somit zu einer Reduzierung von Ablagerungen in den Anlagen, einer besseren Phasentrennung und damit einer besseren Entfernung von Verunreinigungen, einer Verminderung von Korrosion in den Anlange sowie zu einer Schonung von Katalysatoren bei der Weiterverarbeitung führen.

Es hat sich weiters gezeigt, dass es für die Entfernung von Wachscarbonsäuren vorteilhaft ist, den basischen Waschschritt bei einer hohen Temperatur durchzuführen. Eine hohe Temperatur führt zu einer besseren Löslichkeit der Wachscarbonsäuren in der wässrigen Phase. Es ist daher vorteilhaft, wenn das Waschen des synthetischen Rohölstroms mit der ersten wässrigen Waschlösung bei einer Temperatur von mehr als 100 °C erfolgt, da viele Salze von Wachscarbonsäuren, insbesondere Alkalisalze, bei diesen Temperaturen besonders gut wasserlöslich sind und besonders effizient über die wässrige Phase entfernt werden können.

Im Stand der Technik wurden wässrige basische Waschlösungen bisher vor allem dazu verwendet, den Säuregehalt im synthetischen Rohöl zu reduzieren. Im Zuge der vorliegenden Erfindung hat sich herausgestellt, dass eine wässrige basische Waschlösung aber auch dazu verwendet werden kann, um Neutralverbindungen wie Ester, Aldehyde, Ketone, Organohalogenverbindungen, Amide und Nitrile zu entfernen. Im erfindungsgemäßen Verfahren können solche Neutralverbindungen durch die erste wässrige Waschlösung basisch hydrolysiert werden. Die Produkte der basischen Hydrolyse sind unter anderem saure Verbindungen, beispielsweise Carbonsäuren, welche im Zuge der basischen Wäsche entfernt werden, sowie basische Verbindungen, beispielsweise Amine, welche im später folgenden sauren Waschschritt entfernt werden können.

Daraus ergibt sich ein weiterer Vorteil, wenn der basische Waschschritt bei einer höheren Temperatur durchgeführt wird: Während saure Verbindungen wie Carbonsäuren und Phenole im Rahmen der basischen Wäsche lediglich deprotoniert werden müssen, um mit der wässrigen Waschlösung entfernt zu werden, müssen Neutralverbindungen, welche unter den Waschbedingungen nicht deprotoniert werden können, eine Hydrolysereaktion unterlaufen. Die Hydrolysereaktion ist temperaturabhängig und läuft bei höheren Temperaturen schneller ab. Höhere Temperaturen im basischen Waschschritt führen daher zu einer besseren Entfernung von Neutralverbindungen. In diesem Zusammenhang ist es günstig, wenn das Waschen des synthetischen Rohölstroms mit der ersten wässrigen Waschlösung bei einer Temperatur von mehr als 100 °C erfolgt.

Das im erfindungsgemäßen Verfahren vorgesehene Waschen des ersten gereinigten synthetischen Rohölstroms mit einer sauren Waschlösung ermöglicht zusätzlich zur Entfernung von Hydrolyseprodukten aus dem basischen Waschschritt die Entfernung weiterer basischer Verbindungen wie Amine, Pyridine und anderer basischer Verunreinigungen. Insbesondere können dadurch auch polycyclische Amine effizient entfernt werden können. Polycyclische Amine können in synthetischen Rohölen, insbesondere in Pyrolyseölen, in größerem Ausmaß vorliegen. Sie können sich beispielsweise in Cracking-Prozessen in Anwesenheit einer Stickstoffquelle bilden, beispielsweise Additive oder Polymere wie Polyamid (PA), Polyacrylnitril (PAN) oder Acrylnitril-Butadien-Styrol-Copolymer (ABS). Bei polycyclischen Aminen kann es sich beispielsweise um polykondensierte - gesättigte, einfach und mehrfach ungesättigte oder aromatische Ringsysteme handeln. Sie können teilweise im synthetischen Rohöl gelöst oder im kolloidalen Bereich in Schwebe vorliegen und resultieren häufig in unerwünschten Ablagerungen und damit in einer erschwerten Reinigung der Anlage. Außerdem können sie zu einer Verlegung von aktiven Oberflächen von Katalysatoren bei Folgeanwendungen führen. Zusätzlich können sie unerwünschte Verbindungen wie Salze, Chlorid, Schwermetalle oder Sulfide in der organischen Produktphase lösen. Es hat sich gezeigt, dass durch das erfindungsgemäße Verfahren polycyclische Amine effizient entfernt werden können. Für die Entfernung von polycyclischen Aminen hat es sich als vorteilhaft erwiesen, wenn der saure Waschschritt bei einer Temperatur von mindestens 20 °C erfolgt. Besonders effizient ist die Entfernung, wenn die Temperatur mindestens 50 °C beträgt.

Allerdings hat es sich im Zuge der Erfindung überraschenderweise als vorteilhaft erwiesen, wenn die Temperatur im sauren Waschschritt nicht zu hoch ist, insbesondere niedriger als die Temperatur im basischen Waschschritt. So hat sich gezeigt, dass hohe Temperaturen im sauren Waschschritt zu einer Reduktion der Produktausbeute sowie zur Bildung von Verunreinigungen führen können. Nach Ansicht der Erfinder, ohne an eine Theorie gebunden zu sein, ist dies durch Reaktionen von Olefinen mit der eingesetzten Säure zu erklären, beispielsweise durch Hydroxy-Sulfonierung oder Sulfatierung mit Schwefelsäure oder durch Reaktionen mit anderen Säuren. Als Verunreinigungen können Alkohole, Sulfonate, Sulfate und Hydroxy-Sulfonate entstehen, welche zu Ablagerungen und damit erschwerter Reinigung sowie Korrosion führen können. Es hat sich daher als vorteilhaft erwiesen, den sauren Waschschritt bei einer Temperatur von weniger als 120 °C durchzuführen. Insbesondere können diese nachteiligen Effekte minimiert werden, wenn die Temperatur weniger als 100 °C, noch mehr bevorzugt weniger als 95 °C, beträgt.

Ein zusätzlicher Vorteil der niedrigeren Temperatur im sauren Waschschritt ist, dass die Anforderungen an das Material der Waschvorrichtung deutlich geringer sind. Das Vorliegen saurer Lösungen bei hohen Temperaturen erfordert häufig die Verwendung spezieller Materialien bzw. Beschichtungen, die zu einer signifikanten Kostenerhöhung führen würden.

Ein weiterer Vorteil der Reihenfolge der Waschschritte im erfindungsgemäßen Verfahren, insbesondere im Zusammenhang mit bevorzugten Ausführungsformen, in welchen der basische und der saure Waschschritt Teil eines kontinuierlichen Prozesses sind, ist, dass das Verfahren besonders ökonomisch durchgeführt werden kann. Synthetisches Rohöl wird üblicherweise aus Prozessen mit hohen Temperaturen, z.B. Pyrolyse bzw. Cracken, gewonnen. Wenn das erfindungsgemäße Herstellungsverfahren einem solchen Prozess nachgeschaltet ist, ist kein Erwärmen des synthetischen Rohölstroms erforderlich, sofern der basische Waschschritt vor dem sauren Waschschritt durchgeführt wird. Der aus dem Herstellungsprozess gewonnene synthetische Rohölstrom kann direkt bzw. nach Abkühlen auf die erste Temperatur mit der ersten wässrigen Waschlösung gewaschen werden und der daraus erhaltene erste gereinigte synthetische Rohölstrom kann nach weiterem Abkühlen auf die zweite Temperatur mit der zweiten wässrigen Waschlösung gewaschen werden. Dadurch, dass der synthetische Rohölstrom zwischen den Waschschritten nicht erwärmt werden muss, kann das Verfahren besonders ökonomisch und effizient durchgeführt werden. Im Zusammenhang mit dem erfindungsgemäßen Verfahren ist es daher besonders bevorzugt, wenn der synthetische Rohölstrom zwischen dem Waschen bei der ersten Temperatur und dem Waschen bei der zweiten Temperatur nicht erhitzt wird.

In einer bevorzugten Ausführungsform des erfindungsgemäßen Verfahrens beträgt die erste Temperatur mehr als 100 °C, noch mehr bevorzugt mehr als 105 °C, noch mehr bevorzugt mehr als 110 °C, noch mehr bevorzugt mehr als 115 °C, noch mehr bevorzugt mehr als 120 °C, noch mehr bevorzugt mehr als 125 °C, noch mehr bevorzugt mehr als 130 °C, am meisten bevorzugt mehr als 135 °C. Das Vorsehen einer so hohen ersten Temperatur hat den Vorteil, dass sich im synthetischen Rohölstrom vorliegende Wachscarbonsäuren besser lösen können und durch die basische Wäsche entfernt werden können. Ein zusätzlicher Vorteil der hohen ersten Temperatur ist, dass basische Hydrolysereaktionen besonders schnell ablaufen und Neutralverbindung somit besonders gut entfernt werden können. Besonders bevorzugt ist es, wenn die erste Temperatur im Bereich von 100 °C bis 160 °C, noch mehr bevorzugt von 105 °C bis 155 °C, noch mehr bevorzugt von 110 °C bis 150 °C, am meisten bevorzugt von 115 °C bis 145 °C liegt.

In einer bevorzugten Ausführungsform des erfindungsgemäßen Verfahrens beträgt die zweite Temperatur weniger als 120 °C, bevorzugt weniger als 110 °C, mehr bevorzugt weniger als 100 °C, noch mehr bevorzugt weniger als 95 °C, noch mehr bevorzugt weniger als 90 °C, noch mehr bevorzugt weniger als 80 °C, am meisten bevorzugt weniger als 75 °C. Das Vorsehen einer solchen niedrigeren Temperatur hat den Vorteil, dass die Bildung von Verunreinigungen vermindert und die Produktausbeute erhöht werden kann. Ein zusätzlicher Vorteil der niedrigeren Temperatur ist, dass die Waschvorrichtung weniger harschen Bedingungen ausgesetzt ist und es daher mit weniger teuren Materialien bzw. Materialbeschichtungen auskommt. Gleichzeitig können basische Verbindungen wie Amine und Pyridine dennoch effizient entfernt werden, da zur Entfernung dieser Verbindungen lediglich eine Protonierung aber im Gegensatz zu Neutralverbindungen keine Hydrolysereaktion erforderlich ist. Besonders bevorzugt ist es, wenn die zweite Temperatur im Bereich von 20 °C bis 120 °C, bevorzugt von 30 °C bis 110 °C, mehr bevorzugt von 40 °C bis 100 °C, noch mehr bevorzugt von 50 °C bis 90 °C, noch mehr bevorzugt von 60 °C bis 80 °C, noch mehr bevorzugt von 65 °C bis 75 °C liegt. Dies hat einerseits den Vorteil, dass die Temperatur niedrig genug ist, um die Bildung von Verunreinigungen zu minimieren und andererseits, dass die Temperatur hoch genug ist, um insbesondere polycyclische Amine effizient zu entfernen.

In einer bevorzugten Ausführungsform wird das Waschen des synthetischen Rohölstroms mit der ersten wässrigen Waschlösung mit einer durchschnittlichen Waschdauer von mindestens 0,5 Minuten, bevorzugt mindestens 1 Minute, mehr bevorzugt mindestens 2 Minuten, noch mehr bevorzugt mindestens 5 Minuten, am meisten bevorzugt mindestens 12 Minuten, durchgeführt. Das Vorsehen einer längeren Waschdauer für die basische Wäsche ermöglicht einen vollständigeren Ablauf von Hydrolysereaktionen, sodass Neutralverbindungen noch besser entfernt werden können. Insbesondere ist es daher bevorzugt, wenn die durchschnittliche Waschdauer zwischen 0,5 und 180 Minuten, bevorzugt zwischen 1 und 120 Minuten, mehr bevorzugt zwischen 2 und 60 Minuten, noch mehr bevorzugt zwischen 5 und 30 Minuten, am meisten bevorzugt zwischen 12 und 20 Minuten beträgt.

Die durchschnittliche Waschdauer ist dabei vorzugsweise die durchschnittliche Zeitspanne zwischen dem Inkontaktbringen des synthetischen Rohölstroms mit der ersten wässrigen Waschlösung und dem Abscheiden des ersten gereinigten synthetischen Rohölstroms von der ersten wässrigen Waschlösung. Wenn das Waschen in einem kontinuierlichen Prozess durchgeführt wird, entspricht die durchschnittliche Waschdauer vorzugsweise der durchschnittlichen Verweilzeit in der Waschvorrichtung, z.B. in einem Mixer-Settler.

In einer bevorzugten Ausführungsform erfolgt das Waschen des synthetischen Rohölstroms mit der ersten wässrigen Waschlösung bei einem höheren Druck als das Waschen des ersten gereinigten synthetischen Rohölstroms mit der zweiten wässrigen Waschlösung. Das Vorsehen eines höheren Druckes bei der basischen Wäsche ermöglicht eine höhere Temperatur und damit wiederum eine bessere Entfernung von schwer löslichen Wachscarbonsäuren sowie von Neutralverbindungen. Bei der sauren Wäsche ist hingegen ein niedrigerer Druck vorteilhaft, da wiederum die Bildung unerwünschter Verunreinigungen vermindert werden kann und da die Anforderungen an das Material geringer sind, was zu erheblichen Kosteneinsparungen führen kann.

In einer bevorzugten Ausführungsform erfolgt zumindest das Waschen des synthetischen Rohölstroms mit der ersten wässrigen Waschlösung in einem Druckbehälter. Das Vorsehen eines Druckbehälters ermöglicht das Waschen bei höheren Drücken und Temperaturen und somit eine bessere Entfernung von schwer löslichen Wachscarbonsäuren sowie von Neutralverbindungen.

Vorzugsweise erfolgt das Waschen des synthetischen Rohölstroms mit der ersten wässrigen Waschlösung bei einem Druck von mehr als 2 bar, bevorzugt mehr als 3 bar, mehr bevorzugt mehr als 5 bar, noch mehr bevorzugt mehr als 7 bar, am meisten bevorzugt mehr als 10 bar. Das Vorsehen eines so hohen Druckes ermöglicht, wie erwähnt, eine hohe Temperatur und eine gute Entfernung von schwer löslichen Wachscarbonsäuren sowie von Neutralverbindungen. Besonders bevorzugt ist es, wenn das das Waschen des synthetischen Rohölstroms mit der ersten wässrigen Waschlösung bei einem Druck im Bereich von 2 bar bis 50 bar, bevorzugt von 3 bar bis 35 bar, mehr bevorzugt von 5 bar bis 25 bar, noch mehr bevorzugt von 7 bar bis 20 bar, am meisten bevorzugt von 10 bar bis 18 bar, erfolgt.

Das Waschen des ersten gereinigten synthetischen Rohölstroms mit der zweiten wässrigen Waschlösung erfolgt vorzugsweise bei einem Druck von weniger als 12 bar, bevorzugt weniger als 7 bar, mehr bevorzugt weniger als 6 bar, noch mehr bevorzugt weniger als 5 bar. Das Vorsehen solch eines niedrigeren Druckes ermöglicht, wie erwähnt, den Einsatz günstigerer Materialien. Besonders bevorzugt ist es, wenn das Waschen des ersten gereinigten synthetischen Rohölstroms mit der zweiten wässrigen Waschlösung bei einem Druck im Bereich von 1 bar bis 12 bar, bevorzugt von 1,5 bar bis 7 bar, mehr bevorzugt von 2 bar bis 6 bar, noch mehr bevorzugt von 3 bar bis 5 bar, erfolgt.

Im Rahmen der Erfindung hat es sich als besonders vorteilhaft erwiesen, wenn der pH-Wert der ersten wässrigen Waschlösung mehr als 8, bevorzugt mehr als 9, mehr bevorzugt mehr als 10, noch mehr bevorzugt mehr als 11, noch mehr bevorzugt mehr als 12, am meisten bevorzugt mehr als 13, beträgt. Das Vorsehen eines so hohen pH-Werts begünstig Hydrolysereaktionen, wodurch Neutralverbindungen besonders gut entfernt werden können. Besonders bevorzugt ist es, wenn der pH-Wert der ersten wässrigen Waschlösung im Bereich von 8 bis 14, bevorzugt von 9 bis 13, mehr bevorzugt von 9,5 bis 12, am meisten bevorzugt von 10 bis 11 liegt.

In einer bevorzugten Ausführungsform enthält die erste wässrige Waschlösung Natriumhydroxid. Besonders bevorzugt ist es, wenn die Konzentration von Natriumhydroxid zwischen 0,5 und 10 Gew.-%, insbesondere zwischen 1 und 5 Gew.-%, beträgt.

In Bezug auf das Waschen des ersten gereinigten synthetischen Rohölstroms mit der zweiten wässrigen Waschlösung hat es sich als vorteilhaft erwiesen, wenn der pH-Wert der zweiten wässrigen Waschlösung weniger als 6, bevorzugt weniger als 5, mehr bevorzugt weniger als 4, noch mehr bevorzugt weniger als 3, noch mehr bevorzugt weniger als 2, am meisten bevorzugt weniger als 1, beträgt. Die ermöglicht eine besonders effiziente Entfernung von basischen Verunreinigungen, beispielsweise von Aminen und Pyridinen. Besonders bevorzugt ist es, wenn der pH-Wert der zweiten wässrigen Waschlösung im Bereich von 0 bis 6, bevorzugt von 1 bis 5, mehr bevorzugt von 2 bis 4, am meisten bevorzugt von 2,5 bis 3,5 liegt.

In einer bevorzugten Ausführungsform enthält die zweite wässrige Waschlösung Schwefelsäure. Vorzugsweise beträgt die Konzentration von Schwefelsäure zwischen 0,5 und 10 Gew.-%, insbesondere zwischen 1 und 5 Gew.-%.

Es hat sich als vorteilhaft erwiesen, wenn das volumetrische Mischverhältnis zwischen dem synthetischen Rohölstrom und der ersten wässrigen Waschlösung von 5:1 bis 1:5, vorzugsweise von 2,5:1 bis 1:2,5, noch mehr bevorzugt von 1,5:1 bis 1:1,5, beträgt. Ein solches Mischverhältnis ermöglicht sowohl eine besonders effiziente Entfernung von Wachscarbonsäuren sowie Hydrolyse von Neutralverbindungen als auch eine besonders effiziente Entfernung von weiteren sauren Verunreinigungen.

Vorteilhafterweise beträgt das volumetrische Mischverhältnis zwischen dem ersten gereinigten synthetischen Rohölstrom und der zweiten wässrigen Waschlösung von 10:1 bis 1:5, vorzugsweise von 5:1 bis 1:2,5, noch mehr bevorzugt von 2,5:1 bis 1:1,5. Ein solches Mischverhältnis ermöglicht eine besonders effiziente Entfernung von basischen Verunreinigungen.

Das erfindungsgemäße Verfahren kann auch weitere Waschschritte erhalten. Beispielsweise ist es möglich, dass der erste gereinigte synthetische Rohölstrom weitere Wasch- oder Reinigungsschritte durchläuft, bevor das Waschen mit der zweiten wässrigen Waschlösung stattfindet. Bevorzugt ist es jedoch, wenn zwischen dem Waschen des synthetischen Rohölstroms mit der ersten wässrigen Waschlösung und dem Waschen des ersten gereinigten synthetischen Rohölstroms mit der zweiten wässrigen Waschlösung kein weiterer Reinigungsschritt erfolgt, insbesondere kein Waschschritt, kein Filtrierungsschritt und/oder kein Hydrotreating-Schritt. Dies hat unter anderem den Vorteil, dass basische Produkte, welche durch die basische Hydrolyse aus Neutralverbindungen entstehen, im unmittelbar auf den basischen Waschschritt folgenden sauren Waschschritt entfernt werden können.

Vorzugsweise umfasst das erfindungsgemäße Verfahren keine Filtrierungsschritte. Das Vermeiden von Filtrierungsschritten führt zu einem besonders einfachen und ökonomischen Verfahren. Filtrierungsschritte können insbesondere aus dem Grund vermieden werden, dass das Waschen des synthetischen Rohölstroms mit der basischen wässrigen Waschlösung bei einer höheren Temperatur durchgeführt wird. Dadurch können insbesondere Wachscarbonsäuren effizient entfernt werden, welche sich bei niedrigeren Temperaturen oft schlechter lösen und bei schlechter Entfernung eine Filtrierung erforderlich machen können.

Das erfindungsgemäße Verfahren kann zur zusätzlichen Entfernung von Verunreinigungen auch einen Hydrotreating-Schritt umfassen. Bevorzugt ist es jedoch, wenn das erfindungsgemäße Verfahren keinen Hydrotreating-Schritt umfasst. Das Vermeiden eines Hydrotreating-Schritts führt zu einem besonders einfachen und ökonomischen Reinigungsverfahren. Die erfindungsgemäß vorgesehenen Waschschritte ermöglichen eine besonders gute Entfernung von Verunreinigungen, auch wenn kein Hydrotreating-Schritt vorgesehen ist.

In einer besonders bevorzugten Ausführungsform umfasst das erfindungsgemäße Verfahren ferner den Schritt des Waschens des zweiten gereinigten synthetischen Rohölstroms mit einer dritten wässrigen Waschlösung bei einer dritten Temperatur, um einen dritten gereinigten synthetischen Rohölstrom zu erhalten. Das Vorsehen eines solchen weiteren Waschschritts ermöglicht eine besonders gründliche Entfernung von Verunreinigungen, welche nach dem basischen und dem sauren Waschschritt noch vorhanden sein können.

In diesem Zusammenhang ist es besonders bevorzugt, wenn der pH-Wert der dritten wässrigen Waschlösung im Bereich von 3 bis 13, bevorzugt von 4 bis 12, mehr bevorzugt von 5 bis 11, noch mehr bevorzugt von 6 bis 10, noch mehr bevorzugt von 6,5 bis 9, am meisten bevorzugt von 7 bis 8 liegt. Ein pH-Wert in diesem Bereich ist besonders effektiv für die Entfernung von kleinen polaren neutralen Molekülen sowie von anorganischen und organischen Salzen. Besonders vorteilhaft ist es, wenn die dritte wässrige Waschlösung basisch oder im Wesentlichen neutral, insbesondere im Wesentlichen neutral, ist.

In einer bevorzugten Ausführungsform enthält die dritte wässrige Waschlösung Neutralamine. Dies hat den Vorteil, dass folgende Anlagen noch besser geschützt werden können.

In einer bevorzugten Ausführungsform ist die dritte Temperatur niedriger als die erste Temperatur. Dies ermöglicht eine effiziente und ökonomische Verfahrensführung, da der Rohölstrom vor dem Waschen mit der dritten wässrigen Waschlösung nicht erhitzt werden muss.

Vorzugsweise beträgt die dritte Temperatur weniger als 120 °C, bevorzugt weniger als 110 °C, mehr bevorzugt weniger als 100 °C, noch mehr bevorzugt weniger als 90 °C, noch mehr bevorzugt weniger als 80 °C, am meisten bevorzugt weniger als 75 °C. Besonders bevorzugt ist es, wenn die dritte Temperatur im Bereich von 20 °C bis 120 °C, bevorzugt von 30 °C bis 110 °C, mehr bevorzugt von 40 °C bis 100 °C, noch mehr bevorzugt von 50 °C bis 90 °C, noch mehr bevorzugt von 60 °C bis 80 °C, noch mehr bevorzugt von 65 °C bis 75 °C liegt.

Es hat sich als vorteilhaft erwiesen, wenn das Waschen des synthetischen Rohölstroms mit der ersten wässrigen Waschlösung bei einem höheren Druck erfolgt, als das Waschen des zweiten gereinigten synthetischen Rohölstroms mit der dritten wässrigen Waschlösung. Das Vorsehen eines höheren Druckes bei der basischen Wäsche ermöglicht eine höhere Temperatur und damit eine gründlichere Entfernung von schwer löslichen Wachscarbonsäuren sowie von Neutralverbindungen. Beim Waschen mit der dritten wässrigen Waschlösung ist jedoch ein niedrigerer Druck vorteilhaft, da dadurch die Anforderungen an das eingesetzte Material niedriger sind, was zu erheblichen Kosteneinsparungen führen kann.

In einer bevorzugten Ausführungsform erfolgt das Waschen des zweiten gereinigten synthetischen Rohölstroms mit der dritten wässrigen Waschlösung bei einem Druck von weniger als 12 bar, bevorzugt weniger als 10 bar, mehr bevorzugt weniger als 8 bar, noch mehr bevorzugt weniger als 7 bar. Besonders bevorzugt ist ein Druck im Bereich von 1 bar bis 12 bar, bevorzugt von 1,5 bar bis 10 bar, mehr bevorzugt von 2 bar bis 8 bar, noch mehr bevorzugt von 3 bar bis 7 bar.

Es hat sich als vorteilhaft erwiesen, wenn das volumetrische Mischverhältnis zwischen dem zweiten gereinigten synthetischen Rohölstrom und der dritten wässrigen Waschlösung von 10:1 bis 1:5, vorzugsweise von 5:1 bis 1:2,5, noch mehr bevorzugt von 2,5:1 bis 1:1,5, beträgt. Ein solches Mischverhältnis ermöglicht eine besonders effiziente Entfernung von verbleibenden Verunreinigungen.

Im Zusammenhang mit der Erfindung ist es bevorzugt, wenn das Verfahren zur Reinigung eines synthetischen Rohölstroms ein kontinuierliches Verfahren ist. Gegenüber einem Chargenprozess hat dies den Vorteil, dass eine höhere Produktivität und geringere Stillstandszeiten erreicht werden. Vorzugsweise sind die Schritte des Waschens des synthetischen Rohölstroms mit der ersten wässrigen Waschlösung, des Waschens des ersten gereinigten synthetischen Rohölstroms mit der zweiten wässrigen Waschlösung und, sofern vorgesehen, das Waschen des zweiten gereinigten synthetischen Rohölstroms mit der dritten wässrigen Waschlösung daher Teil eines kontinuierlichen Verfahrens. Ebenfalls ist es bevorzugt, wenn das erfindungsgemäße Verfahren zur Herstellung von synthetischem Rohöl ein kontinuierliches Verfahren ist, d.h. wenn auch die Erzeugung des synthetischen Rohölstroms, vorzugsweise durch Depolymerisation von Kunststoffmaterial, Teil des kontinuierlichen Verfahrens ist. Das Vorsehen eines kontinuierlichen Verfahrens hat insbesondere den Vorteil, dass ein Erhitzen des synthetischen Rohölstroms vermieden werden kann, da der aus dem Herstellungsprozess gewonnene synthetische Rohölstrom direkt bzw. nach Abkühlen auf die erste Temperatur mit der ersten wässrigen Waschlösung gewaschen werden kann bzw. der erste gereinigte synthetische Rohölstrom nach Abkühlen von der ersten Temperatur auf die zweite Temperatur mit der zweiten wässrigen Waschlösung gewaschen werden kann.

Typischerweise umfasst das Waschen eines Rohölstroms mit einer wässrigen Waschlösung das Vermischen des Rohölstroms mit der Waschlösung, gefolgt vom Abscheiden des gereinigten Rohölstroms von der wässrigen Waschlösung.

Vorzugsweise werden die Waschschritte des erfindungsgemäßen Verfahrens in einem mechanischen Mischer, in einem statischen Mischer und/oder in einem Mixer-Settler durchgeführt. Als besonders vorteilhaft hat es sich erwiesen, wenn die Waschschritte des erfindungsgemäßen Verfahrens jeweils in einem Mixer-Settler durchgeführt werden. Typischerweise umfassen Mixer-Settler eine kontinuierlich betriebene Mischzone und eine kontinuierliche betriebene Absetzzone und erlauben daher die Durchführung des Mischens des synthetischen Rohölstroms mit der jeweiligen wässrigen Waschlösung, sowie des anschließenden Absetzvorgangs zur Trennung der Phasen und Abscheidung des gereinigten synthetischen Rohölstroms in einem kontinuierlichen Prozess.

Im Zusammenhang mit der Erfindung wird unter einem "synthetischen Rohölstrom" vorzugsweise ein Stoffstrom enthaltend ein synthetisches Rohöl oder eine Fraktion eines synthetischen Rohöls verstanden. Vorzugsweise besteht der synthetische Rohölstrom aus synthetischem Rohöl oder einer Fraktion davon. Im Rahmen der Erfindung ist es besonders bevorzugt, wenn der synthetische Rohölstrom ein Pyrolyseöl oder eine Fraktion davon aufweist, insbesondere daraus besteht. Vorzugsweise ist das Pyrolyseöl ein aus Biomasse, insbesondere Holz, und/oder Kunststoff gewonnenes Pyrolyseöl. Als besonders geeignet hat sich das erfindungsgemäße Verfahren erwiesen, wenn der synthetische Rohölstrom ein aus der Depolymerisation von Biomasse oder Kunststoffmaterial, insbesondere Kunststoffmaterial, gewonnenes Kohlenwasserstoffgemisch ist. Vorzugsweise handelt es sich beim synthetischen Rohölstrom daher um ein Kunststoffpyrolysat oder um eine Fraktion davon, oder um ein Biomasse-, insbesondere Holzpyrolysat, oder um eine Fraktion davon. Das erfindungsgemäße Verfahren ist jedoch ebenfalls gut für andere synthetische Rohöle und Fraktionen davon geeignet. In weiteren bevorzugten Ausführungsformen weist der synthetische Rohölstrom daher Schieferöl oder upgegradetes Bitumen auf, vorzugsweise besteht er daraus.

Im Zusammenhang mit dem erfindungsgemäßen Verfahren zur Herstellung von synthetischem Rohöl ist es daher bevorzugt, wenn der synthetische Rohölstrom durch Depolymerisation von Kunststoffmaterial, vorzugsweise von Kunststoffabfall, erzeugt wird. Der Fachmann ist mit der Herstellung eines synthetischen Rohölstroms durch Depolymerisation von Kunststoffmaterial vertraut. Solche Verfahren sind beispielsweise aus der WO 2012/149590 A1 und der US 6,060,631 A bekannt.

Aus Kunststoffmaterial gewonnenes synthetisches Rohöl enthält typischerweise eine Reihe unterschiedlicher Verunreinigungen, insbesondere auch Wachscarbonsäure, polycyclische Amine und Neutralverbindungen, welche durch das erfindungsgemäße Verfahren besonders gut entfernt werden können. Dies trifft in besonderem Maß auf Kunststoffabfall zu, welcher in der Regel Mischungen unterschiedlicher Kunststoffe umfasst. Zusätzlich enthält Kunststoffmaterial typischerweise Additive, welche zu Verunreinigungen in Form von organischen Phosphaten oder Phosphonaten führen können. Solche Phosphate oder Phosphonate können im erfindungsgemäßen Verfahren basisch hydrolysiert werden und dadurch besonders effizient entfernt werden.

In einer bevorzugten Ausführungsform weist das Kunststoffmaterial Polyethylen (PE), Polypropylen (PP), Polystyrol (PS), Polyvinylchlorid (PVC), Polyethylenterephthalat (PET), Polyamid (PA), Styrol-Acrylnitril (SAN) und/oder Acrylnitril-Butadien-Styrol (ABS) auf. Das erfindungsgemäße Verfahren hat sich als besonders gut geeignet erwiesen, um Verunreinigungen, welche aus den genannten Kunststoffmaterialien resultieren, zu entfernen.

Es ist besonders bevorzugt, wenn das Kunststoffmaterial PVC enthält. Dies führt typischerweise zu Verunreinigungen in Form von Organochlorverbindungen in dem aus dem Kunststoffmaterial gewonnenen Rohölstrom. Organochlorverbindungen können durch die basische Hydrolyse im Zuge des Waschens mit der ersten wässrigen Waschlösung besonders gut entfernt werden.

Ebenfalls bevorzugt ist es, wenn das Kunststoffmaterial PET enthält. Dies führt typischerweise zu Verunreinigungen in Form von Esterverbindungen in dem aus dem Kunststoffmaterial gewonnenen Rohölstrom, welche ebenfalls durch basische Hydrolyse im Zuge des Waschens mit der ersten wässrigen Waschlösung besonders gut entfernt werden können.

Insbesondere ist es bevorzugt, wenn das Kunststoffmaterial PA, SAN, und/oder ABS aufweist. Diese Kunststoffmaterialien führen typischerweise zu Verunreinigungen in Form von Amiden und Nitrilen. Im Zuge des erfindungsgemäßen Verfahrens können diese Verbindungen ebenfalls im Zuge des Waschens mit der ersten wässrigen Waschlösung hydrolysiert werden. Die basischen Verbindungen, welche aus der basischen Hydrolyse gebildet werden, insbesondere Amine, können effizient im später folgenden Waschen mit der sauren wässrigen Waschlösung entfernt werden. PA, SAN und ABS können darüber hinaus als Stickstoffquellen dienen und durch Umlagerungsreaktionen, Kondensationsreaktion und/oder radikalischen Reaktionen beispielsweise mit PE, PP und PS zur vermehrten Bildung polycyclischer Amine beitragen. Diese können durch das erfindungsgemäß vorgesehene Waschen mit der sauren wässrigen Waschlösung effizient entfernt werden.

Sämtliche hierin genannten Parameter beziehen sich, wenn nicht anders gekennzeichnet, auf SATP-Bedingungen nach IUPAC ("Standard Ambient Temperature and Pressure"), insbesondere auf eine Temperatur von 25 °C und einen Druck von 101.300 Pa.

Sämtliche Prozent-Angaben (%) hierin beziehen sich, wenn nicht anders gekennzeichnet, auf Gewichtsprozent.

Sämtliche hierin angegebenen Mischverhältnisse beziehen sich, wenn nicht anders gekennzeichnet, auf volumetrische Mischverhältnisse, d.h. auf Volumenverhältnisse (Volumen:Volumen).

Die hierin für die Waschschritte angegeben Temperaturen beziehen sich vorzugsweise jeweils auf die Temperatur des Gemisches aus Rohölstrom und wässriger Waschlösung unmittelbar nach dem Vermischen und vor der Phasentrennung.

Die vorliegende Erfindung wird durch die folgende Figur illustriert, auf welche sie selbstverständlich nicht eingeschränkt ist.

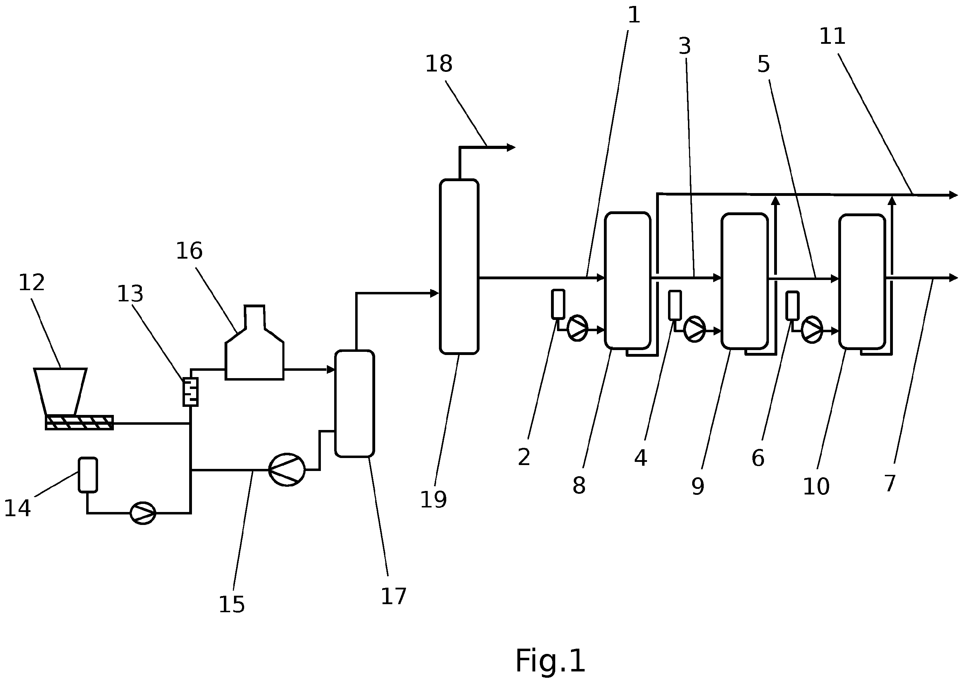

Figur 1 zeigt ein Verfahrensfließschema einer bevorzugten Ausführungsform des erfindungsgemäßen Verfahrens zur Herstellung von synthetischem Rohöl.

In der in Figur 1 gezeigten Ausführungsform wird der synthetische Rohölstrom 1 durch Depolymerisation von Kunststoffmaterial gewonnen. Das Kunststoffmaterial wird einem Extruder 12 kompaktiert, entgast und geschmolzen. Die aus dem Extruder 12 austretende Kunststoffschmelze wird in einem statischen Mischer 13 mit einem externen Lösungsmittel 14, vorzugsweise Schweröl, und/oder mit bereits gecrackten Kunststoffmaterial, welches als Recyclingstrom 15 rückgeführt wird, vermischt, um die Viskosität der Kunststoffschmelze zu reduzieren. Das resultierende Gemisch wird in einen Depolymerisationsreaktor 16 eingebracht, in welchem das Kunststoffmaterial depolymerisiert wird, vorzugsweise bei einer Temperatur zwischen 400°C und 440°C. Gecracktes Kunststoffmaterial wird als Kopfprodukt einer Kolonne 17 gewonnen. Nach Abtrennung eines Gasstroms 18 in einer weiteren Kolonne 19 wird der synthetische Rohölstrom 1 gewonnen.

In der gezeigten Ausführungsform wird der synthetische Rohölstrom 1 mit einer ersten wässrigen Waschlösung 2 in einer Mischzone eines ersten Mixer-Settlers 8 vermischt, vorzugsweise in einem volumetrischen Mischverhältnis von 1:1. Bei der ersten wässrigen Waschlösung 2 handelt es sich vorzugsweise um Natronlauge mit einem pH-Wert zwischen 9 und 12. Das Gemisch aus dem synthetischen Rohölstrom 1 und der ersten wässrigen Waschlösung 2 hat vorzugsweise eine Temperatur von mehr als 100 °C. Da der synthetische Rohölstrom 1 direkt aus dem Herstellungsprozess in den Mixer-Settler 8 geleitet wird, ist kein Erhitzen erforderlich, um diese Temperatur zu erreichen. Die hohe Temperatur verbessert insbesondere die Wasserlöslichkeit von Wachscarbonsäuren, welche aufgrund des basischen pH-Werts in deprotonierter Form in die Wasserphase gelangen. Zusätzlich begünstigt die hohe Temperatur die Hydrolyse von Verunreinigungen in Form von Neutralverbindungen. Saure Hydrolyseprodukte, z.B. Carbonsäuren, werden aufgrund des basischen pH-Werts deprotoniert und gehen ebenfalls als geladene Verbindungen in die Wasserphase über. In der Folge wird die gereinigte Ölphase von der Wasserphase in einer Absetzzone des Mixer-Settlers 8 getrennt. Die durchschnittliche Verweilzeit im ersten Mixer-Settler 8 beträgt vorzugsweise zwischen 5 und 30 Minuten. Die Wasserphase wird als Teil des Abwasserstroms 11 entfernt und die Ölphase wird als erster gereinigter synthetischer Rohölstrom 3 abgetrennt.

Der so erhaltene erste gereinigte synthetische Rohölstrom 3 wird daraufhin in einem zweiten Mixer-Settler 9 mit einer zweiten wässrigen Waschlösung 4 vermischt. Bei der zweiten wässrigen Waschlösung 4 handelt es sich vorzugsweise um wässrige Schwefelsäure mit einem pH-Wert zwischen 0 und 5. Die Temperatur des Gemisches aus dem ersten gereinigte synthetische Rohölstrom 3 und der zweiten wässrigen Waschlösung 4 ist niedriger als die Temperatur des Gemisches im ersten Waschschritt, vorzugsweise beträgt sie weniger als 90 °C. Durch die niedrigere Temperatur im zweiten Waschschritt wird die Bildung von zusätzlichen Verunreinigungen vermindert und die Produktausbeute erhöht. Zusätzlich sind die Anforderungen an das Material des zweiten Mixer-Settlers 9 geringer, insbesondere kann auf teure Materialien und Beschichtungen verzichtet werden. Außerdem kann die zweite Wäsche bei einem niedrigeren Druck durchgeführt werden, was wiederum zu geringeren Anforderungen an das eingesetzte Material führt. Durch das Waschen mit der sauren Waschlösung werden insbesondere basische Verunreinigungen wie Amine oder Pyridine protoniert und gehen dadurch als geladene Verbindungen in die wässrige Phase über. Zusätzlich können verbleibende neutrale Verbindungen auch noch sauer hydrolysiert werden. In der Folge wird wiederum die gereinigte Ölphase von der Wasserphase in einer Absetzzone des Mixer-Settlers 9 getrennt, die Wasserphase wird über den Abwasserstrom 11 entfernt, und aus der Ölphase wird ein zweiter gereinigter synthetischer Rohölstrom 5 erhalten.

Der zweite gereinigte synthetische Rohölstrom 5 wird in der gezeigten Ausführungsform in einem dritten Mixer-Settler 10 mit einer dritten wässrigen Waschlösung 6 gewaschen. Bei der dritten wässrigen Waschlösung 6 handelt es sich vorzugsweise um eine neutrale Waschlösung, vorzugsweise im Wesentlichen um Wasser. Die Temperatur bei diesem Waschschritt entspricht vorzugsweise der Temperatur des zweiten Waschschritts oder liegt darunter. In diesem Waschschritt werden Verunreinigungen entfernt, welche nach den ersten beiden Waschschritte teilweise noch vorhanden sein können, beispielsweise Produkte einer sauren Hydrolyse, kleine polare neutrale Moleküle sowie anorganische und organische Salze. Die neutrale Wäsche erhöht außerdem die Sicherheit in Bezug auf die Weiterverwendung des daraus gewonnenen dritten gereinigten synthetischen Rohölstroms 7. Nach dem Waschen wird die Wasserphase wiederum als Teil des Abwasserstroms 11 entfernt und aus der Ölphase wird der dritte gereinigte synthetische Rohölstrom 7 erhalten.

## Patentansprüche

1. Verfahren zur Reinigung eines synthetischen Rohölstroms (1), umfassend die folgenden Schritte:
- Bereitstellen eines synthetischen Rohölstroms (1);
- Waschen des synthetischen Rohölstroms (1) mit einer ersten wässrigen Waschlösung (2) bei einer ersten Temperatur, um einen ersten gereinigten synthetischen Rohölstrom (3) zu erhalten; und
- Waschen des ersten gereinigten synthetischen Rohölstroms (3) mit einer zweiten wässrigen Waschlösung (4) bei einer zweiten Temperatur, um einen zweiten gereinigten synthetischen Rohölstrom (5) zu erhalten,
**dadurch gekennzeichnet, dass**
die erste wässrige Waschlösung (2) basisch ist, die zweite wässrige Waschlösung (4) sauer ist, und die zweite Temperatur niedriger als die erste Temperatur ist, wobei die erste Temperatur mehr als 100 °C beträgt.

2. Verfahren gemäß Anspruch 1, **dadurch gekennzeichnet, dass** die erste Temperatur mehr als 105 °C beträgt.

3. Verfahren gemäß Anspruch 1 oder 2, **dadurch gekennzeichnet, dass** das Waschen des synthetischen Rohölstroms (1) mit der ersten wässrigen Waschlösung (2) mit einer durchschnittlichen Waschdauer von mindestens 0,5 Minuten, bevorzugt mindestens 1 Minute, mehr bevorzugt mindestens 2 Minuten, noch mehr bevorzugt mindestens 5 Minuten, am meisten bevorzugt mindestens 12 Minuten, durchgeführt wird.

4. Verfahren gemäß einem der Ansprüche 1 bis 3, **dadurch gekennzeichnet, dass** das Waschen des synthetischen Rohölstroms (1) mit der ersten wässrigen Waschlösung (2) bei einem höheren Druck erfolgt als das Waschen des ersten gereinigten synthetischen Rohölstroms (3) mit der zweiten wässrigen Waschlösung (4).

5. Verfahren gemäß einem der Ansprüche 1 bis 4, **dadurch gekennzeichnet, dass** der pH-Wert der ersten wässrigen Waschlösung (2) mehr als 8, bevorzugt mehr als 9, mehr bevorzugt mehr als 10, noch mehr bevorzugt mehr als 11, noch mehr bevorzugt mehr als 12, am meisten bevorzugt mehr als 13, beträgt.

6. Verfahren gemäß einem der Ansprüche 1 bis 5, **dadurch gekennzeichnet, dass** der pH-Wert der zweiten wässrigen Waschlösung (4) weniger als 6, bevorzugt weniger als 5, mehr bevorzugt weniger als 4, am meisten bevorzugt weniger als 3,5, beträgt.

7. Verfahren gemäß einem der Ansprüche 1 bis 6, **dadurch gekennzeichnet, dass** das volumetrische Mischverhältnis zwischen dem synthetischen Rohölstrom (1) und der ersten wässrigen Waschlösung (2) von 5:1 bis 1:5, vorzugsweise von 2,5:1 bis 1:2,5, noch mehr bevorzugt von 1,5:1 bis 1:1,5, beträgt.

8. Verfahren gemäß einem der Ansprüche 1 bis 7, **dadurch gekennzeichnet, dass** zwischen dem Waschen des synthetischen Rohölstroms (1) mit der ersten wässrigen Waschlösung (2) und dem Waschen des ersten gereinigten synthetischen Rohölstroms (3) mit der zweiten wässrigen Waschlösung (4) kein weiterer Waschschritt erfolgt.

9. Verfahren gemäß einem der Ansprüche 1 bis 8 ferner umfassend den folgenden Schritt:
- Waschen des zweiten gereinigten synthetischen Rohölstroms (5) mit einer dritten wässrigen Waschlösung (6) bei einer dritten Temperatur, um einen dritten gereinigten synthetischen Rohölstrom (7) zu erhalten.

10. Verfahren gemäß Anspruch 9, **dadurch gekennzeichnet, dass** der pH-Wert der dritten wässrigen Waschlösung (6) im Bereich von 3 bis 13, bevorzugt von 4 bis 12, mehr bevorzugt von 5 bis 11, noch mehr bevorzugt von 6 bis 10, noch mehr bevorzugt von 6,5 bis 9, am meisten bevorzugt von 7 bis 8 liegt.

11. Verfahren gemäß Anspruch 9 oder 10, **dadurch gekennzeichnet, dass** die dritte Temperatur niedriger als die erste Temperatur ist.

12. Verfahren gemäß einem der Ansprüche 9 bis 11, **dadurch gekennzeichnet, dass** das Waschen des synthetischen Rohölstroms (1) mit der ersten wässrigen Waschlösung (2) bei einem höheren Druck erfolgt, als das Waschen des zweiten gereinigten synthetischen Rohölstroms (5) mit der dritten wässrigen Waschlösung (6).

13. Verfahren gemäß einem der Ansprüche 9 bis 12, **dadurch gekennzeichnet, dass** das volumetrische Mischverhältnis zwischen dem zweiten gereinigten synthetischen Rohölstrom (5) und der dritten wässrigen Waschlösung (6) von 10:1 bis 1:5, vorzugsweise von 5:1 bis 1:2,5, noch mehr bevorzugt von 2,5:1 bis 1:1,5, beträgt.

14. Verfahren zur Herstellung von synthetischem Rohöl, umfassend die folgenden Schritte:
- Erzeugen eines synthetischen Rohölstroms (1), vorzugsweise durch Depolymerisation von Kunststoffmaterial, insbesondere von Kunststoffabfall; und
- Reinigen des synthetischen Rohölstroms (1) nach dem Verfahren gemäß einem der Ansprüche 1 bis 13.

15. Verfahren gemäß Anspruch 14, **dadurch gekennzeichnet, dass** das Kunststoffmaterial Polyethylen (PE), Polypropylen (PP), Polystyrol (PS), Polyvinylchlorid (PVC), Polyethylenterephthalat (PET), Polyamid (PA), Styrol-Acrylnitril (SAN) und/oder Acrylnitril-Butadien-Styrol (ABS) aufweist.

## Claims

1. A process for purifying a synthetic crude oil stream (1), comprising the following steps:
- providing a synthetic crude oil stream (1);
- washing the synthetic crude oil stream (1) with a first aqueous washing solution (2) at a first temperature in order to obtain a first purified synthetic crude oil stream (3); and
- washing the first purified synthetic crude oil stream (3) with a second aqueous washing solution (4) at a second temperature in order to obtain a second purified synthetic crude oil stream (5),
**characterised in that**
the first aqueous washing solution (2) is basic, the second aqueous washing solution (4) is acidic, and the second temperature is lower than the first temperature, wherein the first temperature is more than 100°C.

2. The process according to claim 1, **characterised in that** the first temperature is more than 105°C.

3. The process according to claim 1 or 2, **characterised in that** the washing of the synthetic crude oil stream (1) with the first aqueous washing solution (2) is carried out with an average washing duration of at least 0.5 minutes, preferably at least 1 minute, more preferably at least 2 minutes, even more preferably at least 5 minutes, most preferably at least 12 minutes.

4. The process according to any one of claims 1 to 3, **characterised in that** the washing of the synthetic crude oil stream (1) with the first aqueous washing solution (2) is performed at a higher pressure than the washing of the first purified synthetic crude oil stream (3) with the second aqueous washing solution (4).

5. The process according to any one of claims 1 to 4, **characterised in that** the pH value of the first aqueous washing solution (2) is more than 8, preferably more than 9, more preferably more than 10, even more preferably more than 11, even more preferably more than 12, most preferably more than 13.

6. The process according to any one of claims 1 to 5, **characterised in that** the pH value of the second aqueous washing solution (4) is less than 6, preferably less than 5, more preferably less than 4, most preferably less than 3.5.

7. The process according to any one of claims 1 to 6, **characterised in that** the volumetric mixing ratio between the synthetic crude oil stream (1) and the first aqueous washing solution (2) is from 5:1 to 1:5, preferably from 2.5:1 to 1:2.5, even more preferably from 1.5:1 to 1:1.5.

8. The process according to any one of claims 1 to 7, **characterised in that** between the washing of the synthetic crude oil stream (1) with the first aqueous washing solution (2) and the washing of the first purified synthetic crude oil stream (3) with the second aqueous washing solution (4) no further washing step is performed.

9. The process according to any one of claims 1 to 8 further comprising the following step:
- washing the second purified synthetic crude oil stream (5) with a third aqueous washing solution (6) at a third temperature in order to obtain a third purified synthetic crude oil stream (7).

10. The process according to claim 9, **characterised in that** the pH value of the third aqueous washing solution (6) is in the range from 3 to 13, preferably from 4 to 12, more preferably from 5 to 11, even more preferably from 6 to 10, even more preferably from 6.5 to 9, most preferably from 7 to 8.

11. The process according to claim 9 or 10, **characterised in that** the third temperature is lower than the first temperature.

12. The process according to any one of claims 9 to 11, **characterised in that** the washing of the synthetic crude oil stream (1) with the first aqueous washing solution (2) is performed at a higher pressure than the washing of the second purified synthetic crude oil stream (5) with the third aqueous washing solution (6).

13. The process according to any one of claims 9 to 12, **characterised in that** the volumetric mixing ratio between the second purified synthetic crude oil stream (5) and the third aqueous washing solution (6) is from 10:1 to 1:5, preferably from 5:1 to 1:2.5, even more preferably from 2.5:1 to 1:1.5.

14. A process for producing synthetic crude oil, comprising the following steps:
- producing a synthetic crude oil stream (1), preferably by depolymerisation of plastic material, in particular plastic waste; and
- purifying the synthetic crude oil stream (1) according to the process according to any one of claims 1 to 13.

15. The process according to claim 14, **characterised in that** the plastic material comprises polyethylene (PE), polypropylene (PP), polystyrene (PS), polyvinyl chloride (PVC), polyethylene terephthalate (PET), polyamide (PA), styrene-acrylonitrile (SAN), and/or acrylonitrile-butadiene-styrene (ABS).

## Revendications

1. Procédé de purification d'un flux de pétrole brut synthétique (1), comprenant les étapes suivantes:
- fourniture d'un flux de pétrole brut synthétique (1);
- lavage du flux de pétrole brut synthétique (1) avec une première solution de lavage aqueuse (2) à une première température, pour obtenir un premier flux de pétrole brut synthétique purifié (3); et
- lavage du premier flux de pétrole brut synthétique purifié (3) avec une deuxième solution de lavage aqueuse (4) à une deuxième température, pour obtenir un deuxième flux de pétrole brut synthétique purifié (5),
**caractérisé en ce que**
la première solution de lavage aqueuse (2) est basique, la deuxième solution de lavage aqueuse (4) est acide, et la deuxième température est inférieure à la première température, la première température étant supérieure à 100°C.

2. Procédé selon la revendication 1, **caractérisé en ce que** la première température est supérieure à 105°C.

3. Procédé selon la revendication 1 ou 2, **caractérisé en ce que** le lavage du flux de pétrole brut synthétique (1) avec la première solution de lavage aqueuse (2) est effectué avec une durée moyenne de lavage d'au moins 0,5 minute, de préférence au moins 1 minute, plus préférablement au moins 2 minutes, encore plus préférablement au moins 5 minutes, le plus préférablement au moins 12 minutes.

4. Procédé selon l'une des revendications 1 à 3, **caractérisé en ce que** le lavage du flux de pétrole brut synthétique (1) avec la première solution de lavage aqueuse (2) s'effectue à une pression plus élevée que le lavage du premier flux de pétrole brut synthétique purifié (3) avec la deuxième solution de lavage aqueuse (4).

5. Procédé selon l'une des revendications 1 à 4, **caractérisé en ce que** le pH de la première solution de lavage aqueuse (2) est supérieur à 8, de préférence supérieur à 9, plus préférablement supérieur à 10, encore plus préférablement supérieur à 11, encore plus préférablement supérieur à 12, le plus préférablement supérieur à 13.

6. Procédé selon l'une des revendications 1 à 5, **caractérisé en ce que** le pH de la deuxième solution de lavage aqueuse (4) est inférieur à 6, de préférence inférieur à 5, plus préférablement inférieur à 4, le plus préférablement inférieur à 3,5.

7. Procédé selon l'une des revendications 1 à 6, **caractérisé en ce que** le rapport volumétrique de mélange entre le flux de pétrole brut synthétique (1) et la première solution de lavage aqueuse (2) est de 5:1 à 1:5, de préférence de 2,5:1 à 1:2,5, encore plus préférablement de 1,5:1 à 1:1,5.

8. Procédé selon l'une des revendications 1 à 7, **caractérisé en ce qu'**aucune étape de lavage supplémentaire n'est effectuée entre le lavage du flux de pétrole brut synthétique (1) avec la première solution de lavage aqueuse (2) et le lavage du premier flux de pétrole brut synthétique purifié (3) avec la deuxième solution de lavage aqueuse (4).

9. Procédé selon l'une des revendications 1 à 8, comprenant en outre l'étape suivante:
- lavage du deuxième flux de pétrole brut synthétique purifié (5) avec une troisième solution de lavage aqueuse (6) à une troisième température, pour obtenir un troisième flux de pétrole brut synthétique purifié (7).

10. Procédé selon la revendication 9, **caractérisé en ce que** le pH de la troisième solution de lavage aqueuse (6) se situe dans la plage de 3 à 13, de préférence de 4 à 12, plus préférablement de 5 à 11, encore plus préférablement de 6 à 10, encore plus préférablement de 6,5 à 9, le plus préférablement de 7 à 8.

11. Procédé selon la revendication 9 ou 10, **caractérisé en ce que** la troisième température est inférieure à la première température.

12. Procédé selon l'une des revendications 9 à 11, **caractérisé en ce que** le lavage du flux de pétrole brut synthétique (1) avec la première solution de lavage aqueuse (2) s'effectue à une pression plus élevée que le lavage du deuxième flux de pétrole brut synthétique purifié (5) avec la troisième solution de lavage aqueuse (6).

13. Procédé selon l'une des revendications 9 à 12, **caractérisé en ce que** le rapport volumétrique de mélange entre le deuxième flux de pétrole brut synthétique purifié (5) et la troisième solution de lavage aqueuse (6) est de 10:1 à 1:5, de préférence de 5:1 à 1:2,5, encore plus préférablement de 2,5:1 à 1:1,5.

14. Procédé de production de pétrole brut synthétique, comprenant les étapes suivantes:
- génération d'un flux de pétrole brut synthétique (1), de préférence par dépolymérisation de matière plastique, en particulier de déchets plastiques; et
- purification du flux de pétrole brut synthétique (1) selon le procédé de l'une des revendications 1 à 13.

15. Procédé selon la revendication 14, **caractérisé en ce que** la matière plastique comprend du polyéthylène (PE), du polypropylène (PP), du polystyrène (PS), du chlorure de polyvinyle (PVC), du polyéthylène téréphtalate (PET), du polyamide (PA), du styrène-acrylonitrile (SAN) et/ou de l'acrylonitrile-butadiène-styrène (ABS).
